Europäisches Patentamt

European Patent Office

Office européen des brevets

(11) Numéro de publication: **0 088 672**
**A1**

## (12) DEMANDE DE BREVET EUROPEEN

(21) Numéro de dépôt: 83400397.2

(22) Date de dépôt: 25.02.83

(51) Int. Cl.³: **G 01 K 1/08**

(30) Priorité: 01.03.82 FR 8203342

(71) Demandeur: **Lebeau, Bernard, 31,35, rue d'Epinay, F-92700 Colombes (FR)**
Demandeur: **Soudry, David, 15, avenue Thierry, F-92410 Ville D'avray (FR)**

(43) Date de publication de la demande: **14.09.83 Bulletin 83/37**

(72) Inventeur: **Lebeau, Bernard, 31,35, rue d'Epinay, F-92700 Colombes (FR)**
Inventeur: **Soudry, David, 15, avenue Thierry, F-92410 Ville D'avray (FR)**

(84) Etats contractants désignés: **BE CH DE IT LI NL**

(74) Mandataire: **Mongrédien, André et al, c/o BREVATOME 25, rue de Ponthieu, F-75008 Paris (FR)**

(54) **Etuis pour thermomètre médical ou article semblable.**

(57) L'invention se rapporte à des étuis comportant une partie de fond stable et une partie de dessus à la fois transparente et grossissante pour permettre une meilleure lecture d'un thermomètre médical ou encore pour permettre une meilleure observation d'un article semblable.

Chaque étui (1), de forme allongée, constitué d'un seul bloc à fond stable, comporte une cavité centrale (2) au fond de laquelle est ménagé un logement (7) ouvert vers l'extérieur destiné à recevoir le réservoir (8) du thermomètre (3) ou une extrémité dudit article et au moins une ouverture longitudinale (10) ménagée sur les côtés ou sur le fond de l'étui pour faciliter l'introduction et l'extraction du thermomètre médical ou dudit article au moyen des doigts de la main.

EP 0 088 672 A1

La présente invention se rapporte à des étuis pour le logement et la lecture d'un thermomètre médical ou pour le logement et la présentation d'un article semblable. L'invention se rapporte en particulier à des étuis comportant une partie de fond stable et à une partie de dessus à la fois transparente et grossissante pour permettre une meilleure lecture d'un thermomètre médical ou encore pour permettre une meilleure observation d'un article semblable.

On connaît déjà des étuis de ce type et en particulier ceux qui comportent un corps creux et sont constitués de deux tronçons articulés l'un sur l'autre au niveau de leur fond et d'un couvercle ayant un effet grossissant comme une loupe pouvant glisser à la partie supérieure de l'étui en verrouillant les deux tronçons en position fermée et en les déverrouillant en position ouverte pour permettre l'introduction et l'extraction du thermomètre médical.

Ces étuis de fabrication relativement compliquée ont un prix de revient élevé et en outre, à l'usage, ils se révèlent fragiles, cassants, et d'un maniement mal aisé pour des personnes non averties.

On a maintenant découvert conformément à la présente invention le moyen de fournir de nouveaux étuis beaucoup moins compliqués et par suite d'une fabrication simple et d'un prix de revient intéressant.

L'invention a pour objet un étui pour thermomètre médical ou article semblable comportant une partie transparente et grossissante servant à la lecture du thermomètre ou à l'observation d'un article semblable, caractérisé en ce que cet étui de forme allongée constitué d'un seul bloc à fond stable comporte une cavité centrale au fond de laquelle est ménagé un logement débouchant vers l'extérieur destiné à recevoir le réservoir du thermomètre ou une extrémité dudit article et au moins

B 7554 GL

une ouverture longitudinale ménagée sur les côtés ou sur le fond de l'étui pour faciliter l'introduction et l'extraction du thermomètre ou dudit article au moyen des doigts de la main.

D'autres caractéristiques et avantages de l'invention ressortiront d'ailleurs de la description qui suit de plusieurs modes de réalisation donnés à titre illustratif en référence aux dessins annexés dans lesquels :

- la figure 1 est une vue en perspective d'un premier mode de réalisation d'un étui pour thermomètre médical dans lequel le corps creux est ouvert sur les côtés de l'étui ;

- la figure 2 est une coupe selon la ligne II-II de la figure 1 au niveau du corps du thermomètre ;

- la figure 3 représente trois éléments permettant par simple collage d'obtenir l'étui en un seul bloc de la figure 1 ;

- la figure 4 représente un second mode de réalisation de l'étui destiné également à recevoir un thermomètre médical et comportant une ouverture dans sa partie de fond ;

- la figure 5 représente partiellement une vue de face du fond de l'étui au niveau du logement prévu pour recevoir le réservoir du thermomètre ;

- la figure 6 représente une variante de réalisation du fond de l'étui ;

- la figure 7 représente un étui ouvert sur son fond et permettant le logement d'un stylographe.

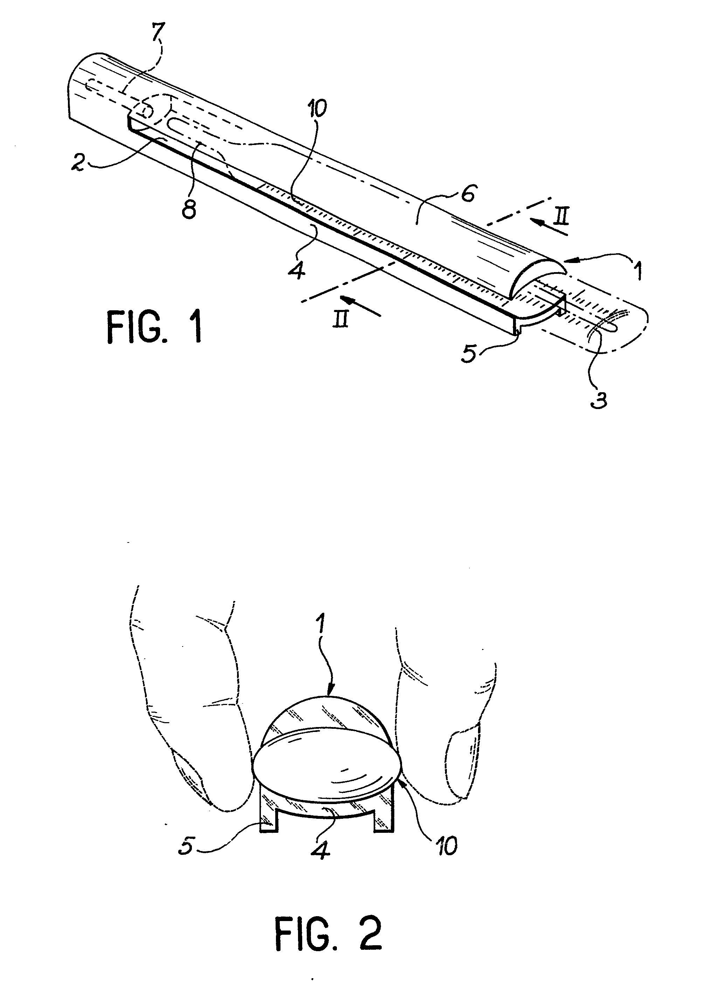

L'étui 1 conforme à l'invention que l'on observe à la figure 1 a une forme allongée et est obtenu par moulage en un seul bloc en une matière plastique par exemple en une résine à l'acétate de cellulose. Cet étui comporte une cavité centrale 2 dans laquelle est introduit un thermomètre 3. Le fond 4 de la cavité 2 repose

B 7554 GL

sur deux nervures longitudinales 5 qui assurent sa stabilité, et la paroi inférieure de cette cavité est incurvée pour épouser la forme du thermomètre sur une grande partie de sa longueur. De la même façon, la partie supérieure de la cavité ou couvercle 6 faisant face au thermomètre est incurvée pour épouser une grande partie de la surface du thermomètre.

On peut observer que la largeur du thermomètre est supérieure à la largeur de l'étui et que de ce fait ce thermomètre déborde par ses bords de moindre épaisseur de chaque côté de l'étui au niveau de l'ouverture 10 apparaissant sur les deux côtés de l'étui.

Comme cela ressort mieux de la figure 2, on peut voir que le déplacement du thermomètre en vue de son introduction et de son extraction est obtenu par application et déplacement simultanés du pouce et de l'index sur les bords minces du thermomètre dont la largeur, comme déjà dit, est supérieure à la largeur de l'étui.

Un logement 7 débouchant vers l'extérieur pour faciliter le nettoyage de l'intérieur de l'étui est ménagé axialement au fond de l'étui pour recevoir le réservoir 8 du thermomètre.

Cet étui est fabriqué facilement en grande série par moulage d'une matière plastique mais il peut également être obtenu par simple collage des trois éléments 6, 4 et 9 obtenus par exemple par extrusion pour donner un étui fini se présentant en un seul bloc.

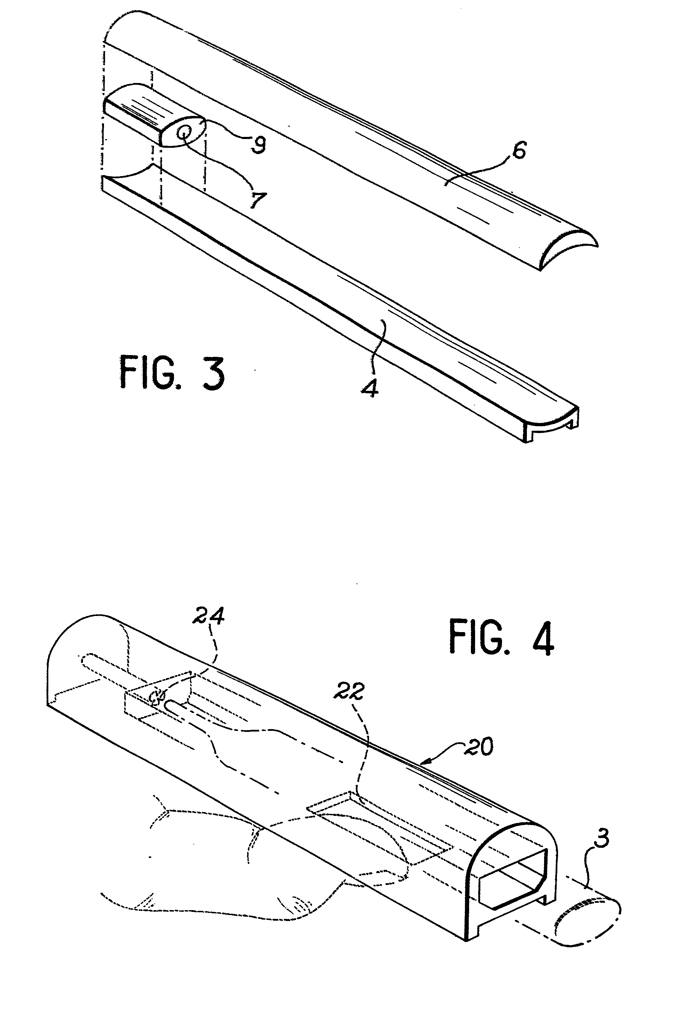

L'étui 20 représenté à la figure 4 comporte non plus comme dans le cas de l'étui précédent une ouverture apparaissant de chaque côté de l'étui mais il comporte une ouverture 22 de forme rectangulaire pratiquée sur son fond. Cette ouverture 22 est suffisamment large pour que l'utilisateur puisse appuyer son doigt sur une partie du thermomètre et le faire ainsi avancer ou recu-

ler par glissement.

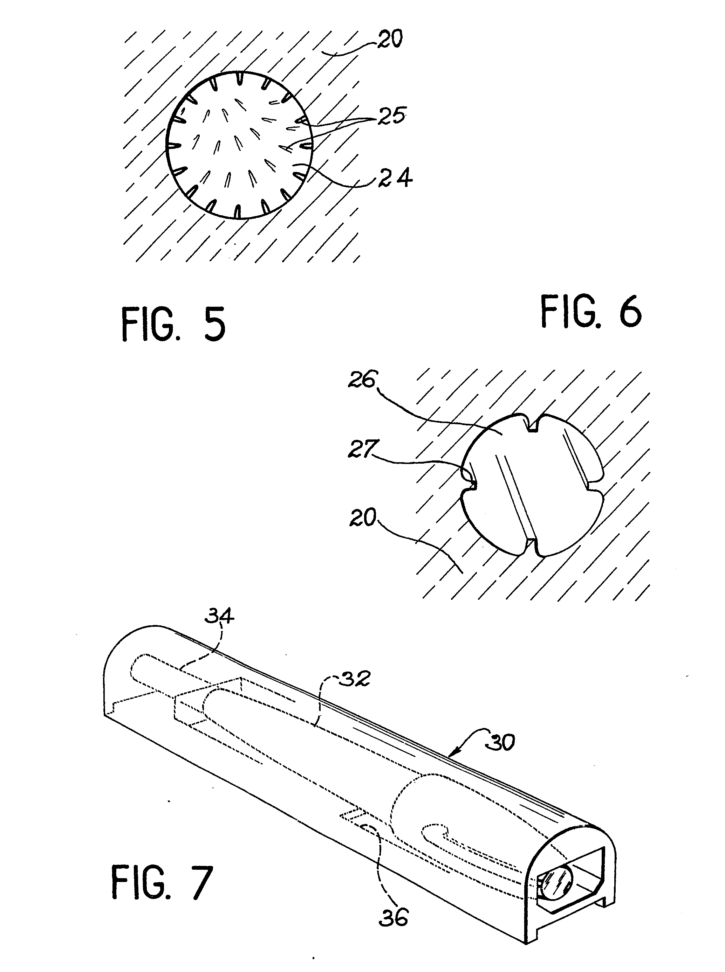

Le logement 24 ménagé au fond de l'étui conforme à l'invention est représenté en coupe sur la figure 5 et est pourvu intérieurement de picots 25 qui contribuent à guider et à maintenir en place le réservoir 8 du thermomètre médical.

Selon la variante de réalisation représentée à la figure 6, le logement 26 du réservoir du thermomètre comporte plusieurs nervures longitudinales qui ont un rôle semblable à celui des picots 25 de la figure 5.

L'étui 30 représenté à la figure 7 est prévu pour recevoir un stylo 32 dont la partie inférieure s'introduit dans un logement 34 prévu à cet effet. Cet étui est également pourvu d'une ouverture rectangulaire 36 qui est analogue à l'ouverture 22 de l'étui de la figure 4 et qui permet de faire glisser le stylo par un seul doigt. L'étui 30 est avantageusement en matière plastique et sa partie de dessus est conçue pour être grossissante et favoriser ainsi l'observation du stylo, l'étui devenant de ce fait un présentoir publicitaire grossissant.

Il est bien entendu que l'étui peut être totalement transparent ainsi qu'entièrement opaque à l'exception toutefois d'au moins une partie du couvercle puisque ce dernier doit faire office de loupe pour la lecture d'un thermomètre ou pour l'observation d'un article de présentation.

B 7554 GL

REVENDICATIONS

1. Etui pour thermomètre médical ou article semblable comportant une partie transparente et grossissante servant à la lecture du thermomètre médical ou à l'observation d'un article semblable, caractérisé en ce que cet étui (1) de forme allongée, constitué d'un seul bloc à fond stable, comporte une cavité centrale (2) au fond de laquelle est ménagé un logement (7) ouvert vers l'extérieur, destiné à recevoir le réservoir (8) du thermomètre (3) ou une extrémité dudit article et au moins une ouverture longitudinale (10) ménagée sur les côtés ou sur le fond de l'étui pour faciliter l'introduction et l'extraction du thermomètre médical ou dudit article au moyen des doigts de la main, l'étui comprend en outre une partie de couvercle (6) et une partie de fond (4) entre lesquelles est formée la cavité centrale (2) prévue pour épouser la forme du thermomètre sur une grande partie de sa surface et permettre ainsi son glissement à frottement doux.

2. Etui selon la revendication 1, caractérisé en ce que le logement (7) du fond de l'étui est équipé intérieurement de picots (25) pour le guidage et le maintien en place du réservoir du thermomètre médical.

3. Etui selon la revendication 2, caractérisé en ce que le logement (7) du fond de l'étui comporte plusieurs rainures (27) axiales.

4. Etui selon l'une quelconque des revendications précédentes, caractérisé en ce que la matière de cet étui est à la fois souple et rigide et avantageusement en une résine d'acétate de cellulose.

B 7554 GL

FIG. 1

FIG. 2

FIG. 3

FIG. 4

FIG. 5

FIG. 6

FIG. 7

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE-C- 103 759 (F. LUCK) <br> * Figures 1-7; description en entier * | 1 | G 01 K 1/08 |
| X | DE-C-2 851 260 (HCH. DENZLER AG.) <br> * Figures 1,2; page 1, paragraphe 6 - page 7 * | 1 | |
| X | US-A-3 338 390 (A.W. GORDON) <br> * Figures 1-3; titre; ensemble du brevet * | 1,3,4 | |
| X | US-A-3 315 525 (F.S. SIEVE) <br> * Figures 1,3,4,5; titre; colonne 2, lignes 28-50; colonne 3, lignes 20-68 * | 1,2 | |
| A | FR-A-2 466 243 (ARTSANA SpA) <br> * Figures 1,2,3,4; document en entier * | 1 | DOMAINES TECHNIQUES RECHERCHES (Int. Cl. ³) <br><br> G 01 K |

Le présent rapport de recherche a été établi pour toutes les revendications

| Lieu de la recherche <br> LA HAYE | Date d'achèvement de la recherche <br> 16-06-1983 | Examinateur <br> VISSER F.P.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82